# EUROPÄISCHE PATENTANMELDUNG

(11) **EP 4 607 145 A1**
(43) Veröffentlichungstag der Anmeldung: **27.08.2025**
(21) Anmeldenummer: 25157444.8
(22) Anmeldetag: 12.02.2025
(51) Int. Cl.: G01B 11/14, G01B 11/25, F01D 21/00, F01D 25/28

(54) **VERMESSUNG EINES RADIALSPALTES EINER GASTURBINENBAUGRUPPE**

(30) Priorität: 20.02.2024 DE 102024104748
(71) Anmelder: MTU Aero Engines AG, 80995 München (DE)
(72) Erfinder: Gründmayer, Jürgen, 80995 München (DE); Weber, Josef, 80995 München (DE)

(57) **Zusammenfassung**

Die vorliegende Erfindung betrifft ein Verfahren zur Vermessung eines Radialspaltes (s) zwischen einem Gehäuseabschnitt (20) einer Gasturbinenbaugruppe und einem in dem Gehäuseabschnitt angeordneten Rotorabschnitt (11) eines Rotors (10) der Gasturbinenbaugruppe mithilfe eines Messsystems, welches an dem Rotorabschnitt befestigt ist und eine Beleuchtungseinrichtung (31) und einen Empfänger (32) aufweist, wobei das Verfahren den Schritt: Beleuchten des Gehäuseabschnitts mithilfe der Beleuchtungseinrichtung und Erfassen von von dem Gehäuseabschnitt reflektierter Strahlung mithilfe des Empfängers in einer ersten Drehstellung des Rotors; und die mehrfach wiederholten Schritte: Verstellen des Rotors in eine weitere Drehstellung; und Beleuchten des Gehäuseabschnitts mithilfe der Beleuchtungseinrichtung und Erfassen von von dem Gehäuseabschnitt reflektierter Strahlung mithilfe des Empfängers in dieser weiteren Drehstellung des Rotors; sowie den Schritt aufweist: Ermitteln eines Radialspaltmaßes zwischen dem Gehäuseabschnitt und dem Rotorabschnitt auf Basis der erfassten reflektierten Strahlungen. Die Erfindung betrifft außerdem ein Messsystem und einen Messaufbau.

## Beschreibung

Die vorliegende Erfindung betrifft ein Verfahren, ein Messsystem und einen Messaufbau zur Vermessung eines Radialspaltes zwischen einem Gehäuseabschnitt einer Gasturbinenbaugruppe und einem in dem Gehäuseabschnitt angeordneten Rotorabschnitt eines Rotors der Gasturbinenbaugruppe.

Eine Aufgabe einer Ausführung der vorliegenden Erfindung ist es, eine Vermessung eines Radialspaltes zwischen einem Gehäuseabschnitt einer Gasturbinenbaugruppe und einem in dem Gehäuseabschnitt angeordneten Rotorabschnitt eines Rotors der Gasturbinenbaugruppe zu verbessern.

Diese Aufgabe wird durch ein Verfahren mit den Merkmalen des Anspruchs 1 gelöst. Ansprüche 9, 10 stellen ein Messsystem bzw. einen Messaufbau zur Durchführung eines hier beschriebenen Verfahrens unter Schutz. Die Unteransprüche betreffen vorteilhafte Weiterbildungen.

Nach einer Ausführung der vorliegenden Erfindung weist eine Baugruppe für eine Gasturbine, vorzugsweise eine Baugruppe einer Gasturbine, bevorzugt eine Baugruppe mit einer oder mehreren Verdichter- und/oder einer oder mehreren Turbinenstufen für die bzw. der Gasturbine, einen Gehäuseabschnitt und einen in diesem Gehäuseabschnitt angeordneten Rotorabschnitt eines Rotors der Gasturbinenbaugruppe auf.

Die Gasturbine(nbaugruppe) ist in einer Ausführung eine Flugtriebwerk-Gasturbine(nbaugruppe). Der Rotorabschnitt weist in einer Ausführung wenigstens einen Abschnitt wenigstens einer Laufschaufel auf, kann insbesondere ein Laufschaufelabschnitt sein. Zusätzlich oder alternativ ist der Rotorabschnitt ein radial äußerer bzw. dem Gehäuseabschnitt zugewandter bzw. (radial) gegenüberliegender Rotorabschnitt, insbesondere also ein radial äußerer bzw. dem Gehäuseabschnitt zugewandter bzw. (radial) gegenüberliegender Laufschaufelabschnitt. Hierfür ist die vorliegende Erfindung aufgrund der Bedingungen und Anforderungen bei einem Vermessen besonderes geeignet.

Vorliegend ist eine Axialrichtung vorzugsweise parallel zu einer Rotationsachse des Rotors bzw. (Haupt)Maschinenachse der Gasturbine(nbaugruppe), eine Umfangsrichtung eine Rotationsrichtung um diese Rotations- bzw. (Haupt)Maschinenachse und eine Radialrichtung senkrecht zur Axial- und Umfangsrichtung, vorzugsweise von der Rotationsachse weg.

Nach einer Ausführung der vorliegenden Erfindung ist ein Messsystems, das zur, vorzugsweise ortsaufgelösten, Vermessung eines Radialspaltes zwischen dem Gehäuseabschnitt und dem Rotorabschnitt eingerichtet ist bzw. verwendet wird, an dem Rotorabschnitt, vorzugsweise temporär und/oder ohne Zerstörung des Messsystems ("messsystemzerstörungsfrei") lösbar, befestigbar, in einer Weiterbildung, vorzugsweise temporär und/oder ohne Zerstörung des Messsystems ("messsystemzerstörungsfrei") lösbar, befestigt, und weist eine Beleuchtungseinrichtung und einen Empfänger auf.

Nach einer Ausführung der vorliegenden Erfindung weist ein Verfahren zur, vorzugsweise ortsaufgelösten, Vermessung eines Radialspaltes zwischen dem Gehäuseabschnitt und dem Rotorabschnitt mithilfe eines hier beschriebenen Messsystems, welches, vorzugsweise temporär und/oder messsystemzerstörungsfrei lösbar, an dem Rotorabschnitt befestigt ist, den Schritt:
- Beleuchten des Gehäuseabschnitts mithilfe der Beleuchtungseinrichtung und Erfassen von von dem Gehäuseabschnitt reflektierter Strahlung mithilfe des Empfängers in einer ersten Drehstellung des Rotors;

und die mehrfach wiederholten Schritte:
   - Verstellen des Rotors in eine weitere Drehstellung; und
   - Beleuchten des Gehäuseabschnitts mithilfe der Beleuchtungseinrichtung und Erfassen von von dem Gehäuseabschnitt reflektierter Strahlung mithilfe des Empfängers in dieser weiteren Drehstellung des Rotors;
sowie den Schritt auf:
   - Ermitteln eines Radialspaltmaßes zwischen dem Gehäuseabschnitt und dem Rotorabschnitt, insbesondere für die jeweilige Drehstellung, auf Basis der erfassten reflektierten Strahlungen.

Dem liegt insbesondere die Idee zugrunde, das Radialspaltmaß in den verschiedenen Drehstellungen optisch und damit vorteilhafterweise reibungslos und/oder präzise und/oder schnell zu ermitteln.

Bei einem oder mehr Paaren in Umfangsrichtung benachbarter der Drehstellungen weisen in einer Ausführung die beiden Drehstellungen des jeweiligen Paares einen Winkelversatz von höchstens 5°, vorzugsweise höchstens 2°, zueinander auf. Zusätzlich oder alternativ sind die Drehstellungen in einer Ausführung äquidistant verteilt. Zusätzlich oder alternativ wird der Rotor beim Verstellen des Rotors in die Drehstellung
- manuell oder motorisch; und/oder
- kontinuierlich oder intermittierend; und/oder
- insgesamt um wenigstens 355°, vorzugsweise wenigstens 358°,
verdreht.

Dadurch kann jeweils, insbesondere in Kombination von zwei oder mehr dieser Merkmale, eine besonders vorteilhafte, insbesondere rasche, einfache, präzise und/oder zuverlässige, Vermessung realisiert werden.

In einer Ausführung weist der Empfänger wenigstens eine Kamera auf, kann insbesondere eine Kamera sein, und
- das Beleuchten des Gehäuseabschnitts umfasst jeweils ein Aufleuchten eines Beleuchtungsmusters, welches vorzugsweise eine oder mehrere, bevorzugt gerade, Linie(n) aufweist, insbesondere hieraus bestehen kann, auf den Gehäuseabschnitt mithilfe der Beleuchtungseinrichtung;
- das Erfassen von von dem Gehäuseabschnitt reflektierter Strahlung umfasst jeweils ein Aufnehmen eines Bildes des (mithilfe der Beleuchtungseinrichtung auf den Gehäuseabschnitt aufgeleuchteten) Beleuchtungsmusters mithilfe der Kamera; und
- das Ermitteln des Radialspaltmaßes umfasst ein Ermitteln des Radialspaltmaßes auf Basis der aufgenommenen Bilder.

Mit anderen Worten weist das Verfahren in dieser Ausführung den Schritt:
- Aufleuchten des Beleuchtungsmusters mithilfe der Beleuchtungseinrichtung und Aufnehmen eines Bildes dieses Beleuchtungsmusters mithilfe der Kamera in einer bzw. der ersten Drehstellung des Rotors;

und die mehrfach wiederholten Schritte:
   - Verstellen des Rotors in eine weitere Drehstellung; und
   - Aufleuchten des Beleuchtungsmusters mithilfe der Beleuchtungseinrichtung und Aufnehmen eines Bildes des Beleuchtungsmusters mithilfe der Kamera in dieser weiteren Drehstellung des Rotors;
sowie den Schritt auf:
   - Ermitteln eines Radialspaltmaßes zwischen dem Gehäuseabschnitt und dem Rotorabschnitt, insbesondere für die jeweilige Drehstellung, auf Basis der aufgenommenen Bilder.

Mithilfe dieser (Kamera-)Variante kann in einer Ausführung das Radialspaltmaß besonders vorteilhaft, insbesondere präzise, einfach und/oder schnell, ermittelt werden.

In einer Ausführung wird jeweils eine Zeit zwischen dem, vorzugsweise gepulsten bzw. intermittierenden, Beleuchten des Gehäuseabschnitts mithilfe der Beleuchtungseinrichtung und dem Erfassen von von dem Gehäuseabschnitt reflektierter Strahlung erfasst, wobei das Ermitteln des Radialspaltmaßes ein Ermitteln des Radialspaltmaßes, insbesondere für die jeweilige Drehstellung, auf Basis dieser Laufzeiten umfasst, vorzugsweise ist. Mit anderen Worten wird das Radialspaltmaß in dieser (Lidar-)Variante mittels eines Lidar-Verfahrens ermittelt.

Mithilfe dieser (Lidar)Variante kann in einer Ausführung das Radialspaltmaß ebenfalls sehr vorteilhaft, insbesondere präzise, einfach und/oder schnell, ermittelt werden. Dabei kann die Kamera-Variante insbesondere ein kompakte(re)s, störungssichere(re)s und/oder autonome(re)s Messsystem und/oder eine einfache(re) Vermessung ermöglichen, die Lidar-Variante insbesondere eine besonders präzise Messung.

In einer Ausführung weist das an dem Rotorabschnitt befestigte Messsystem eine Sensoreinrichtung auf, mithilfe derer eine, insbesondere ein-, zwei-, drei- oder mehr-, in einer Ausführung sechsdimensionale, Pose des Messsystems, insbesondere in den bzw. der jeweiligen Drehstellung(en), und/oder die (jeweilige) Drehstellung(en) des Rotors ermittelt wird bzw. werden bzw. die hierzu eingerichtet ist bzw. verwendet wird. In einer Ausführung weist die Sensoreinrichtung wenigstens einen Beschleunigungssensor und/oder wenigstens ein Gyroskop auf.

In einer Ausführung werden die solcherart ermittelten Posen bzw. Drehstellungen bei dem Beleuchten des Gehäuseabschnitts und/oder bei dem Erfassen von von dem Gehäuseabschnitt reflektierter Strahlung und/oder bei dem Ermitteln des Radialspaltmaßes verwendet. Dies kann insbesondere umfassen, dass das Beleuchten des Gehäuseabschnitts und/oder Erfassen von von dem Gehäuseabschnitt reflektierter Strahlung in der jeweiligen Drehstellung auf Basis der solcherart ermittelten Posen und/oder Drehstellungen ausgelöst bzw. durchgeführt wird und/oder die solcherart ermittelten Posen und/oder Drehstellungen und die Messungen, insbesondere also die aufgenommenen Bilder oder ermittelten Laufzeiten, in den jeweiligen Drehstellungen einander bei dem Ermitteln des Radialspaltmaßes zugeordnet werden.

Zusätzlich oder alternativ weist in einer Ausführung das an dem Rotorabschnitt befestigte Messsystem einen Energiespeicher auf, der das Messsystem, vorzugsweise
- die Beleuchtungseinrichtung; und/oder
- der Empfänger, in einer Weiterbildung die Kamera; und/oder
- die Sensoreinrichtung zum Ermitteln einer Pose des Messsystems und/oder einer Drehstellung des Rotors; und/oder
- die nachfolgend genannte Recheneinheit und/oder Speichereinrichtung, wenigstens temporär, vorzugsweise wenigstens beim Beleuchten des Gehäuseabschnitts mithilfe der Beleuchtungseinrichtung und/oder beim Erfassen von von dem Gehäuseabschnitt reflektierter Strahlung mithilfe des Empfängers, insbesondere Aufnehmen eines Bildes des Beleuchtungsmusters mithilfe der Kamera, und/oder Verarbeiten und/oder Speichern von von dem Empfänger erfassten Signalen mithilfe der Recheneinheit bzw. Speichereinrichtung, mit elektrischer Energie versorgt, so dass das Messsystem (energie)autark ist, bzw. der hierzu eingerichtet ist bzw. verwendet wird.

Zusätzlich oder alternativ weist in einer Ausführung das an dem Rotorabschnitt befestigte Messsystem eine bzw. die vorgenannte Recheneinheit auf, die
- die Beleuchtungseinrichtung; und/oder
- den Empfänger, in einer Weiterbildung die Kamera; und/oder
- die Sensoreinrichtung zum Ermitteln einer Pose des Messsystems und/oder einer Drehstellung des Rotors; und/oder
- das Abspeichern von von dem Empfänger erfassten Signalen steuert und/oder, vorzugsweise noch während das Messsystem an dem Rotorabschnitt befestigt ist, von dem Empfänger erfasste Signale, in einer Ausführung mithilfe der Kamera aufgenommene Bilder, verarbeitet bzw. die hierzu eingerichtet ist bzw. verwendet wird.

Zusätzlich oder alternativ weist in einer Ausführung das an dem Rotorabschnitt befestigte Messsystem eine Speichereinrichtung auf, die von dem Empfänger erfasste Signale, in einer Ausführung mithilfe der Kamera aufgenommene Bilder, und/oder ein Ergebnis einer Verarbeitung mithilfe der Recheneinheit von von dem Empfänger erfassten Signalen, in einer Ausführung mithilfe der Kamera aufgenommener Bilder, speichert, vorzugsweise zusammen mit diesen zugeordneten, mithilfe der Sensoreinrichtung ermittelten Posen des Messsystems und/oder Drehstellung des Rotors, bzw. die hierzu eingerichtet ist bzw. verwendet wird.

Dadurch kann jeweils, insbesondere in Kombination von zwei oder mehr dieser Merkmale, besonders vorteilhaft ein(e) autarke(s) Messsystem bzw. Vermessung realisiert werden.

In einer Ausführung wird das Messsystem vor dem Erfassen der reflektierten Strahlung messsystemzerstörungsfrei, in einer Weiterbildung magnetisch und/oder mittels löslicher Klebeverbindung und/oder mechanisch z.B. per Klemmung, und/oder an einer Laufschaufel des Rotors befestigt und/oder nach dem Erfassen der reflektierten Strahlung, vorzugsweise messsystemzerstörungsfrei, von dem Rotorabschnitt entfernt und/oder durch eine Öffnung des Gehäuseabschnitts entfernt.

Dadurch kann vorteilhafterweise eine Störung eines Testbetriebs der Gasturbinenbaugruppe reduziert und/oder das Messsystem mehrfach (wieder)verwendet und so ein Kosten- und/oder Materialaufwand reduziert werden.

Gemäß einem bevorzugten Aspekt der Erfindung wird das Messsystem durch eine Boroskopöffnung oder dergleichen, insbesondere mithilfe eines Boroskops, an einer Laufschaufel oder an einer Statorschaufel oder an einem Gehäuseabschnitt lösbar befestigt und/oder entfernt.

Dadurch kann das Messsystem im zusammengebauten Zustand der Gasturbinenbaugruppe, insbesondere in einer betriebsfähigen Gasturbine, eingesetzt und auch wieder entfernt werden, wohingegen aus dem Stand der Technik bekannte Systeme oft nur an leicht von außen zugänglichen Fanschaufeln befestigt werden können.

In einer Ausführung weist die Beleuchtungseinrichtung wenigstens einen Laser auf. Dadurch kann insbesondere in der Kamera-Variante das Beleuchtungsmuster präzise(r) aufgeleuchtet bzw. in der Lidar-Variante die gepulste bzw. intermittierende Beleuchtung präzise(r) getaktet und/oder die Laufzeit(en) präziser ermittelt und dadurch jeweils die Präzision der Vermessung verbessert werden.

In einer Ausführung weist das Messsystem ein Gehäuse auf, in dem die Beleuchtungseinrichtung und der Empfänger, in einer Weiterbildung auch die Sensoreinrichtung und/oder der Energiespeicher und/oder die Recheneinheit und/oder die Speichereinrichtung, angeordnet ist bzw. sind und/oder das eine Maximalabmessung von höchstens 5 cm, vorzugsweise höchstens 3 cm aufweist. Hierdurch kann in einer Ausführung in der Art einer sogenannten Pillcam ein besonders kompaktes und/oder geschütztes Messsystem verwendet und dadurch das Vermessen verbessert werden, insbesondere ermöglicht dies eine Montage/Demontage des Systems durch eine Boroskopöffnung.

In einer Ausführung, vorzugsweise der Kamera-Variante, weist der Empfänger des an dem Rotorabschnitt befestigten Messsystems (die) wenigstens eine Kamera auf, mithilfe derer wenigstens ein Bild eines Abschnitts, vorzugsweise einer gehäuseabschnittseitigen Kante, des Rotorabschnitts oder einer an dem Rotorabschnitt temporär angebrachten Kalibriervorrichtung, beispielsweise eines Kalibrierwinkels oder dergleichen, aufgenommen wird und das Messsystem wird auf Basis dieses Bildes kalibriert. In einer Ausführung kann auf Basis der (unterschiedlichen) Positionen des Beleuchtungsmusters in den aufgenommenen Bildern eine Änderung des Radialspaltes ermittelt werden. Insbesondere durch die zusätzliche Kalibrierung anhand eines Bildes eines Abschnitts des Rotorabschnitts oder einer daran temporär angebrachten Kalibriervorrichtung kann zusätzlich ein (absoluter) Radialspalt zwischen dem Rotorabschnitt und dem Gehäuseabschnitt ermittelt werden. Entsprechend kann ein Radialspaltmaß im Sinne der vorliegenden Erfindung insbesondere einen Radialspalt und/oder dessen Änderung angeben, vorzugsweise für die (jeweilige) Drehstellung(en).

In einer weiteren ggf. unabhängig zu beanspruchenden Ausführungsform sind Empfänger und Beleuchtungseinrichtung des Messsystems dazu eingerichtet ein 3D-Scan-Verfahren durchzuführen. Beispielsweise könnte dies per Streifenprojektion geschehen, wobei die Beleuchtungseinrichtung in diesem Fall ein Projektor wäre, der dazu eingerichtet ist, strukturiertes Licht zu projizieren und der Empfänger wäre eine oder mehrere Kameras, die in einem vorbestimmten Winkel Aufnahmen des strukturierten Lichts machen. Alternativ könnte das 3D-Scan-Verfahren auch ein z.B. Laserscanningverfahren sein. In einer solchen Ausführungsform des Messsystems mit 3D-Scan-Verfahren kann das Messsystem zumindest ein Kamerasystem zur konventionellen Bildgebung umfassen, und dazu eingerichtet sein, diese Bilddaten mittels einer Recheneinrichtung/eines Microcontrollers auf die mit dem 3D-Scan-Verfahren erfassten 3D-Daten zu projizieren um ein vollständiges Bild des Triebwerkinneren zu erhalten. In einem solchen Verfahren, in dem ein 3D-Scanverfahren eingesetzt wird, kann das Messsystem entweder an einer Laufschaufel befestigt werden und Aufnahmen von Gehäuseabschnitten oder anderen statischen Strukturen machen oder an einem Gehäuse- oder Statorabschnitt befestigt werden und Aufnahmen eines (schrittweise) drehenden Rotors machen.

Nach einer Ausführung der vorliegenden Erfindung weist ein Messaufbau eine hier beschriebene Gasturbinenbaugruppe und ein hier beschriebenes Messsystem auf, mithilfe dessen ein hier beschriebenes Verfahren durchgeführt wird bzw. wird ein hier beschriebenes Messsystem bzw. ein hier beschriebener Messaufbau zur Durchführung eines hier beschriebenen Verfahrens verwendet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das Messsystem.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Messaufbau nach einer Ausführung der vorliegenden Erfindung mit einem Rotor bei einer Vermessung eines Radialspaltes in einer ersten Drehstellung;
- Fig. 2: den Messaufbau bei einem weiteren Schritt einer Vermessung des Radialspaltes nach einer Ausführung der vorliegenden Erfindung mit dem Rotor in einer weiteren Drehstellung; und
- Fig. 3: eine Seitenansicht, die zeigt, wie ein Messsystem gemäß der vorliegenden Erfindung durch ein Boroskopauge mithilfe eines Boroskops an einer Laufschaufel befestigt wird.

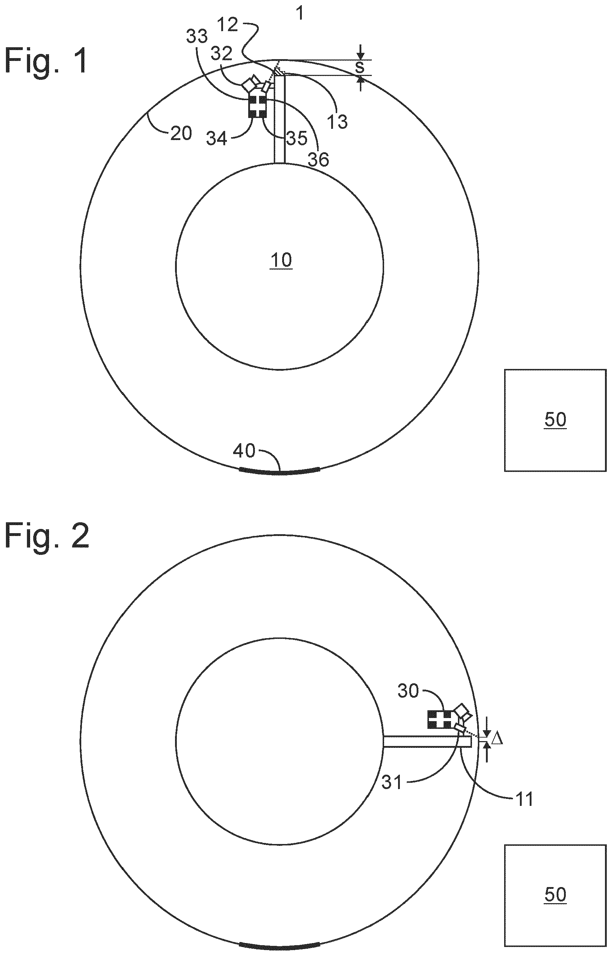

Fig. 1 zeigt einen Messaufbau nach einer Ausführung der vorliegenden Erfindung mit einem in einem Gehäuseabschnitt 20 angeordneten Rotor 10 einer Gasturbinenbaugruppe bei einer Vermessung eines Radialspaltes s zwischen einem in dem Gehäuseabschnitt 20 angeordneten Rotorabschnitt in Form einer Laufschaufel 11 (vgl. Fig. 2) des Rotors 10 mithilfe eines Messsystems nach einer Ausführung der vorliegenden Erfindung bei einer ortsaufgelösten Vermessung des Radialspaltes nach einer Ausführung der vorliegenden Erfindung, wobei der Rotor 10 in Fig. 1 eine erste Drehstellung aufweist. Weitere Laufschaufeln des Rotors, beispielsweise einer oder mehrerer Verdichter- oder Turbinenstufen, sind zur besseren Übersichtlichkeit nicht dargestellt.

Das autarke Messsystem ist bzw. wird vor dem nachfolgend anhand Fig. 1 erläuterten Schritt des Verfahrens messsystemzerstörungsfrei, bevorzugt magnetisch oder mittels lösbarer Klebeverbindung, an der Laufschaufel 11 befestigt und nach dem letzten der nachfolgend anhand Fig. 2 erläuterten Schritte des Verfahrens von dem Rotorabschnitt bzw. der Laufschaufel 11 entfernt und durch eine Boroskopöffnung 40 des Gehäuseabschnitts 20 entfernt.

Ein Gehäuse 30 des Messsystems beinhaltet eine Beleuchtungseinrichtung, im Ausführungsbeispiel einen Linienlaser 31 (vgl. Fig. 2), und einen Empfänger, im Ausführungsbeispiel eine Kamera 32 (vgl. Fig. 1).

Das Gehäuse 30 beinhaltet weiter eine Sensoreinrichtung zum Ermitteln einer Pose des Messsystems und (daraus) einer Drehstellung des Rotors, im Ausführungsbeispiel in Form einer Inertialmesseinrichtung 33, im Ausführungsbeispiel mit einem 6-DOF-Sensor bzw. aufweisend einen Beschleunigungssensor und ein Gyroskop (vgl. Fig. 1).

Das Gehäuse 30 beinhaltet weiter eine Recheneinheit, im Ausführungsbeispiel einen Mikrocontroller 34, zum Verarbeiten von von dem Empfänger bzw. der Kamera 32 erfassten Signalen bzw. aufgenommenen Bildern, eine(n) Speicher(einrichtung), im Ausführungsbeispiel eine Speicherkarte 35, zum Abspeichern von von dem Empfänger bzw. der Kamera 32 erfassten Signalen bzw. aufgenommenen Bildern, sowie einen Energiespeicher, im Ausführungsbeispiel einen Akku 36 (vgl. Fig. 1).

Das Messsystem wird bzw. ist an der Schaufel 11 derart befestigt, dass Kamera 32 und Laser 31 auf den Gehäuseabschnitt 20 gerichtet sind. Der Laser ist in einem schrägen Winkel zur Kamera justiert, sodass der Auftreffort der Laserlinie vom Abstand des Gehäuseabschnitts von der Messeinrichtung abhängt.

Nun wird der Rotor gedreht. In bestimmten Winkelabständen wird der Laser 31 kurz eingeschaltet und ein Bild mithilfe der Kamera 32 aufgenommen und auf der Speicherkarte 35 abgespeichert. Dabei kann das Auslösen des Lasers und Aufnehmen des Bildes in bestimmten Winkelabständen mithilfe der Sensoreinrichtung 33 erfolgen bzw. ausgelöst werden und/oder eine mithilfe der Sensoreinrichtung 33 ermittelte Pose des Messsystems und/oder Drehstellung des Rotors zusammen mit dem jeweiligen Bild abgespeichert und bei dem Ermitteln des Radialspaltmaßes verwendet werden.

Nach einem vollständigen Durchdrehen des Rotors 10 um 360° wird das Messsystem wieder durch die Boroskopöffnung 40 entfernt, vorzugsweise mithilfe eines (Hakens am Ende eines) Boroskops (nicht dargestellt) und die Bilder an einem PC 50 ausgewertet.

Wie der Vergleich der beiden Drehstellungen der Fig. 1, 2 illustriert bzw. in Fig. 2 durch die Verschiebung Δ angedeutet, ändert sich die Lage des Beleuchtungsmusters bzw. der aufgeleuchteten Linie innerhalb des jeweiligen Bildes entsprechend einer Veränderung des Radialspaltes s, so dass durch die Auswertung der Bilder eine Veränderung des Radialspaltes s ermittelt werden kann. Die Zuordnung des jeweiligen Radialspaltmaßes zu der jeweiligen Drehstellung kann dabei zum Beispiel darüber erfolgen, dass eine entsprechende Sensorinformation der Inertialmesseinrichtung 33 mit abgespeichert wird. Zusätzlich oder alternativ kann die Inertialmesseinrichtung 33 auch dazu genutzt werden, die Bilder in entsprechenden Drehstellungen aufzunehmen.

Fig. 1 illustriert einen Schritt des Verfahrens, in dem in einer ersten Drehstellung des Rotors 10 der Gehäuseabschnitt 20 mithilfe der Beleuchtungseinrichtung 31 beleuchtet und von von dem Gehäuseabschnitt reflektierte Strahlung mithilfe des Empfängers erfasst bzw. ein Bild des von dem Laser 31 aufgeleuchteten Belichtungsmusters mithilfe der Kamera 32 aufgenommen wird.

Fig. 2 illustriert einen weiteren Schritt des Verfahrens, in dem in einer (von mehreren) weiteren Drehstellung(en) des Rotors 10 (jeweils) der Gehäuseabschnitt 20 mithilfe der Beleuchtungseinrichtung 31 beleuchtet und von von dem Gehäuseabschnitt reflektierte Strahlung mithilfe des Empfängers erfasst bzw. ein Bild des von dem Laser 31 aufgeleuchteten Belichtungsmusters mithilfe der Kamera 32 aufgenommen wird.

Fig. 1 veranschaulicht zudem einen Schritt des Verfahrens, bei dem mithilfe der Kamera 32 ein Bild einer gehäuseabschnittseitigen Kante 12 der Laufschaufel aufgenommen und das Messsystem auf Basis dieses Bildes kalibriert wird, beispielsweise auf Basis der Lage und Größe der Kante in diesem Bild.

In der vorliegenden Offenbarung impliziert "weist ein X auf allgemein keine abschließende Aufzählung, sondern ist eine Kurzform von "weist wenigstens ein X auf und umfasst auch "weist zwei oder mehr X auf sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist.

So kann insbesondere dann, wenn die Kante 12 der Laufschaufel 11 sich nicht im Kamerabild befindet bzw. nicht von der Kamera 32 erfasst wird, stattdessen zum Kalibrieren ein temporär an der Laufschaufel angebrachter Kalibrierwinkel 13 verwendet werden wie in Fig. 1 schraffiert angedeutet.

Vorstehend wurde eine Kamera-Variante erläutert. In einer alternativen Lidar-Variante sendet der Laser 31 in der jeweiligen Drehstellung Laserimpulse aus und der Lidar-Empfänger 32 detektiert das von dem Gehäuseabschnitt reflektierte Licht. Aus der Laufzeit der Lichtsignale wird, beispielsweis durch die Recheneinheit 34, die Entfernung bzw. das Radialspaltmaß berechnet. Gleichermaßen können die Laufzeiten auch auf der Speicherkarte gespeichtert und nachfolgend extern, beispielsweise an dem PC 50, ausgewertet werden.

In einer weiteren Ausführungsform beinhaltet die autarke Messeinheit (ca. 8mm x 20mm) mehrere Kameras, Linienlaser, eine Inertialmesseinrichtung, ein Mikrocontroller, ein Speicher sowie einen Akku. Die Messeinrichtung wird mittels einer löslichen Klebeverbindung bzw. magnetisch auf einer Laufschaufel befestigt (d.h. am Rotor), sodass Kamera und Laser auf Statoren gerichtet sind. Alternativ wird die Messeinheit mit der gleichen Technik am Gehäuse bzw. an einem Stator-Teil befestigt und auf einen Rotor gerichtet. Die Laser erzeugen mehrere Linien bzw. ein Muster, die in einem schrägen Winkel zur Kamera ausgerichtet sind, sodass der Auftreffort der Laserlinie vom Abstand der Schaufel und Statoren abhängen.

In einem bestimmten Winkelabstand werden der Laser kurz eingeschaltet und ein Bild abgespeichert. Aus diesen Bildern kann dann ein 3D-Modell des Triebwerkinneren errechnet werden. Zusätzlich können auch "normale" Fotos aufgenommen werden. Es ist möglich diese Bilddaten auf die 3D-Daten zu projizieren um ein vollständiges Bild des Triebwerkinneren zu erhalten.

Nach der Messung, also nach dem Durchdrehen des Rotors, kann die Messeinrichtung wieder durch eine bestehende Boroskopöffnung entfernt (z.B. mittels eines Hakens am Ende eines Boroskops) und die Bilder am PC ausgewertet werden. Es können damit Genauigkeiten in einer Größenordnung von 10 µm erreicht werden.

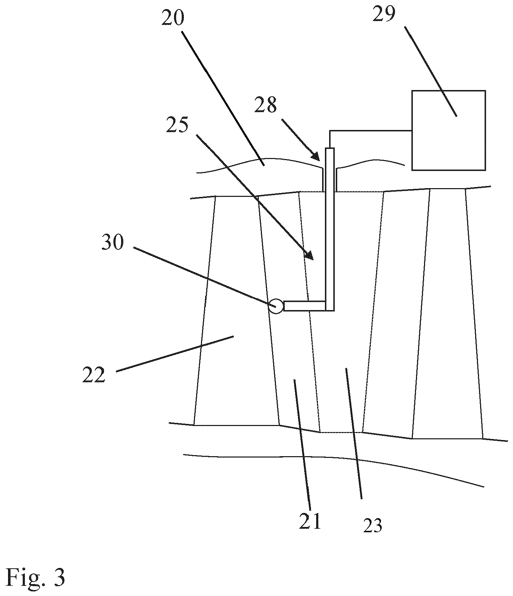

Fig. 3 zeigt eine gegenüber den Figuren 1 und 2 um 90° rotierte Seitenansicht, in der zu sehen ist, wie mittels eines Boroskops 25 ein Messsystem (in dem Gehäuse 30) in eine Gasturbinenbaugruppe (hier eine fertig montierte Gasturbine) eingeführt wird. Das Boroskop 25 wird über eine Boroskopsteuereinrichtung 29 gesteuert und mit dem Messsystem durch Boroskopauge 28 in das Innere des Gehäuseabschnitts 20 eingeführt. Ein Boroskopauge 28 ist eine im für Inspektionen im Gehäuse 20 vorgesehene Öffnung, die im Betrieb mit einem Stopfen verschließbar ist. Das Messsystem kann auf diese Weise mittels des Boroskop in einer Gasturbine (oder auch einem Prüfstand) montiert werden, ohne dass diese zuerst zerlegt werden muss. Das Messsystem kann lösbar an einer Laufschaufel 22 oder auch an einer Statorschaufel 23 oder einem innenliegenden Gehäuseabschnitt lösbar befestigt werden und auch wieder durch die Boroskopöffnung 28 entfernbar sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Rotor
- 11: Laufschaufel (Rotorabschnitt)
- 12: Kante
- 13: Kalibrierwinkel
- 20: Gehäuseabschnitt
- 21: Zwischenraum
- 22: Laufschaufel
- 23: Statorschaufel
- 25: Boroskop
- 28: Boroskopauge
- 29: Boroskopsteuereinheit
- 30: Messsystem-Gehäuse
- 31: Laser
- 32: Empfänger (Kamera oder Lidar-Empfänger)
- 33: Sensoreinrichtung
- 34: Mikrocontroller
- 35: Speicherkarte
- 36: Akku
- 40: Boroskopöffnung
- 50: PC
- s: Radialspalt
- Δ: Veränderung/Verschiebung

## Patentansprüche

1. Verfahren zur Vermessung eines Radialspaltes (s) zwischen einem Gehäuseabschnitt (20) einer Gasturbinenbaugruppe und einem in dem Gehäuseabschnitt angeordneten Rotorabschnitt (11) eines Rotors (10) der Gasturbinenbaugruppe mithilfe eines Messsystems, welches an dem Rotorabschnitt befestigt ist und eine Beleuchtungseinrichtung (31) und einen Empfänger (32) aufweist, wobei das Verfahren den Schritt:
- Beleuchten des Gehäuseabschnitts mithilfe der Beleuchtungseinrichtung und Erfassen von von dem Gehäuseabschnitt reflektierter Strahlung mithilfe des Empfängers in einer ersten Drehstellung des Rotors;
und die mehrfach wiederholten Schritte:
- Verstellen des Rotors in eine weitere Drehstellung; und
- Beleuchten des Gehäuseabschnitts mithilfe der Beleuchtungseinrichtung und Erfassen von von dem Gehäuseabschnitt reflektierter Strahlung mithilfe des Empfängers in dieser weiteren Drehstellung des Rotors;
sowie den Schritt aufweist:
- Ermitteln eines Radialspaltmaßes zwischen dem Gehäuseabschnitt und dem Rotorabschnitt auf Basis der erfassten reflektierten Strahlungen.

2. Verfahren nach Anspruch 1, **dadurch gekennzeichnet, dass**
- der Empfänger wenigstens eine Kamera aufweist;
- das Beleuchten des Gehäuseabschnitts jeweils ein Aufleuchten eines Beleuchtungsmusters auf den Gehäuseabschnitt mithilfe der Beleuchtungseinrichtung umfasst;
- das Erfassen von von dem Gehäuseabschnitt reflektierter Strahlung jeweils ein Aufnehmen eines Bildes des Beleuchtungsmusters mithilfe der Kamera umfasst; und
- das Ermitteln des Radialspaltmaßes ein Ermitteln des Radialspaltmaßes auf Basis der aufgenommenen Bilder umfasst.

3. Verfahren nach Anspruch 1, **dadurch gekennzeichnet, dass** jeweils eine Zeit zwischen dem Beleuchten des Gehäuseabschnitts mithilfe der Beleuchtungseinrichtung und dem Erfassen von von dem Gehäuseabschnitt reflektierter Strahlung erfasst wird und das Ermitteln des Radialspaltmaßes ein Ermitteln des Radialspaltmaßes auf Basis dieser Laufzeiten umfasst.

4. Verfahren nach einem der vorhergehenden Ansprüche, **dadurch gekennzeichnet, dass** das an dem Rotorabschnitt befestigte Messsystem eine Sensoreinrichtung (33) aufweist und eine Pose des Messsystems und/oder eine Drehstellung des Rotors mithilfe dieser Sensoreinrichtung ermittelt und bei dem Beleuchten des Gehäuseabschnitts und/oder Erfassen von von dem Gehäuseabschnitt reflektierter Strahlung und/oder Ermitteln des Radialspaltmaßes verwendet wird.

5. Verfahren nach einem der vorhergehenden Ansprüche, **dadurch gekennzeichnet, dass** das an dem Rotorabschnitt befestigte Messsystem
- einen Energiespeicher (36), der das Messsystem mit elektrischer Energie versorgt; und/oder
- eine Recheneinheit (34), die die Beleuchtungseinrichtung und/oder den Empfänger und/oder die Sensoreinrichtung steuert und/oder von dem Empfänger erfasste Signale verarbeitet; und/oder
- eine Speichereinrichtung (35), die von dem Empfänger erfasste Signale und/oder ein Ergebnis einer Verarbeitung von von dem Empfänger erfassten Signalen speichert;
aufweist.

6. Verfahren nach einem der vorhergehenden Ansprüche, **dadurch gekennzeichnet, dass** das Messsystem vor dem Erfassen der reflektierten Strahlung messsystemzerstörungsfrei und/oder an einer Laufschaufel (11) des Rotors befestigt wird und/oder nach dem Erfassen der reflektierten Strahlung von dem Rotorabschnitt und/oder durch eine Öffnung (40) des Gehäuseabschnitts entfernt wird.

7. Verfahren nach einem der vorhergehenden Ansprüche, **dadurch gekennzeichnet, dass** die Beleuchtungseinrichtung wenigstens einen Laser aufweist und/oder das Messsystem ein Gehäuse (30) aufweist, in dem die Beleuchtungseinrichtung und der Empfänger angeordnet ist und/oder das eine Maximalabmessung von höchstens 5 cm aufweist.

8. Verfahren nach einem der vorherigen Ansprüche, **dadurch gekennzeichnet, dass** das Messsystem durch eine Boroskopöffnung im Gehäuseabschnitt (20) oder in einem angrenzenden Gehäuseabschnitt der Gasturbinenbaugruppe hindurchgeführt wird, um es an dem Rotorabschnitt (11) zu befestigen.

9. Verfahren nach einem der vorhergehenden Ansprüche, **dadurch gekennzeichnet, dass** der Empfänger des an dem Rotorabschnitt befestigten Messsystems wenigstens eine Kamera aufweist, mithilfe derer wenigstens ein Bild eines Abschnitts des Rotorabschnitts oder einer daran temporär angebrachten Kalibriervorrichtung (13) aufgenommen und das Messsystem auf Basis dieses Bildes kalibriert wird.

10. Messsystem zur Vermessung eines Radialspaltmaßes (s) zwischen einem Gehäuseabschnitt (20) einer Gasturbinenbaugruppe und einem in dem Gehäuseabschnitt angeordneten Rotorabschnitt (11) eines Rotors (10) der Gasturbinenbaugruppe, welches an dem Rotorabschnitt befestigbar ist, eine Beleuchtungseinrichtung (31) und einen Empfänger (32) aufweist und zur Durchführung der Schritte des Beleuchtens des Gehäuseabschnitts und Erfassen von von dem Gehäuseabschnitt reflektierter Strahlung eines Verfahrens nach einem der vorhergehenden Ansprüche eingerichtet ist.

11. Messaufbau, aufweisend eine Gasturbinenbaugruppe und ein Messsystem zur Vermessung eines Radialspaltmaßes (s) zwischen einem Gehäuseabschnitt (20) der Gasturbinenbaugruppe und einem in dem Gehäuseabschnitt angeordneten Rotorabschnitt (11) eines Rotors (10) der Gasturbinenbaugruppe, der zur Durchführung eines Verfahrens nach einem der vorhergehenden Ansprüche eingerichtet ist.
